(19) Europäisches Patentamt
European Patent Office
Office européen des brevets

(11) **EP 0 919 795 B1**

(12) **EUROPEAN PATENT SPECIFICATION**

(45) Date of publication and mention
of the grant of the patent:
**29.06.2011 Bulletin 2011/26**

(51) Int Cl.:
*G01J 9/00* *(2006.01)*     *G01H 9/00* *(2006.01)*
*G01J 9/02* *(2006.01)*     *G01D 5/353* *(2006.01)*

(21) Application number: **98122177.3**

(22) Date of filing: **26.11.1998**

(54) **Method for determining the phase difference of light waves propagated over two paths**

Verfahren zur Phasendifferenzbestimmung von über zwei Strahlungswege propagierten Lichtwellen

Procédé pour déterminer la différence de phase des ondes de lumière propagés sur deux trajectoires

(84) Designated Contracting States:
**DE FR GB IT NL**

(30) Priority: **26.11.1997 US 979162**

(43) Date of publication of application:
**02.06.1999 Bulletin 1999/22**

(73) Proprietor: **Northrop Grumman Guidance
and Electronics Company, Inc.
Woodland Hills, CA 91367-6675 (US)**

(72) Inventors:
• **Hall, David B.
La Crescenta,
California 91214 (US)**
• **Frederick, Donald A.
Woodland Hills,
California 91367 (US)**

• **Bunn, James B.
Austin,
Texas 78758 (US)**
• **Bunn Jr.,James S.
Malibu,
California 90265 (US)**

(74) Representative: **Wagner, Karl H. et al
Wagner & Geyer Partnerschaft
Patent- und Rechtsanwälte
Gewürzmühlstrasse 5
80538 München (DE)**

(56) References cited:
**GB-A- 2 190 185     US-A- 5 227 857
US-A- 5 283 625     US-A- 5 452 086**

• **PATENT ABSTRACTS OF JAPAN vol. 1997, no.
12, 25 December 1997 (1997-12-25) & JP 09 203665
A (OKI ELECTRIC IND CO LTD), 5 August 1997
(1997-08-05)**

**Description**

**BACKGROUND OF INVENTION**

Mismatched fiber optic interferometers are used as the sensing elements for fiber optic acoustic arrays. Each fiber optic interferometer produces a signal $S(t)$ which is a function of the time-varying propagation time difference $\tau$ for the two paths of the interferometer.

$$S(t) = A(t) + B(t)\cos\{[\omega_c t + \theta(t)] - [\omega_c(t-\tau) + \theta(t-\tau)]\} \qquad (1)$$

or

$$S(t) = A(t) + B(t)\cos[\omega_c \tau + \theta(t) - \theta(t-\tau)] \qquad (2)$$

The quantity $A(t)$ is proportional to the average input optical power to the interferometer, and $B(t)$ is proportional to the average input optical power and also the mixing efficiency of the interferometer. The angular frequency of the input light beam to the interferometer is $\omega_c$, and $\theta(t)$ is the phase modulation of the light beam entering the interferometer. The phase modulation aids in the extraction of a measure of the propagation time difference $\omega_c\tau$.

The extraction of the propagation time difference measure is typically accomplished utilizing a sinusoidally varying $\theta(t)$ at some carrier frequency produced by either internal frequency modulation of a laser source or by phase modulation with a phase modulator following the laser source. The interferometer output signal consists of a sum of terms involving the various harmonics of the carrier frequency. Mixing of the interferometer signal with appropriate reference signals at harmonics of the carrier frequency and subsequent filtering produces quadrature and inphase outputs at baseband:

$$\begin{aligned} Q &= Q_o \sin\omega_c\tau \\ I &= I_o \cos\omega_c\tau \end{aligned} \qquad (3)$$

An arctangent operation on the ratio $(Q/I)/(Q_0/I_0)$ yields the desired quantity.

A digital alternative to the analog extraction approach described above is needed in order to improve the noise, bandwidth, and dynamic range performance of fiber optic acoustic arrays.

US-A-5227857 relates to a system for cancelling phase noise in an interferometric fiber optic sensor arrangement. In particular, the system intends to measure the time-varying phase difference of light waves propagated over two paths which constitute the two legs of an interferometer. The system comprises a reference interferometer in addition to a sensor interferometer. The outputs of the two interferometers are combined in such a way as to cancel the phase noise present in the sensor interferometer. The system generates frequency-modulated light waves where the frequency of the light wave varies sinusoidally at a frequency $\omega$.

The invention is a method for obtaining a measure of the light propagation time difference for two light-propagating-media paths.

In accordance with the present invention a method for obtaining a measure of the light propagation time difference for two light-propagating-media paths, as set forth in claim 1, is provided. Preferred embodiments of the invention are claimed in the dependent claims.

The first step consists of generating two substantially-identical frequency-modulated light waves whereby the frequency of the light waves is offset from a reference frequency by a different frequency increment for each basic time interval in each of a plurality of groups of three or more basic time intervals. Each frequency increment is the sum of a specified increment and a frequency modulation error increment. The frequency-modulation-error increments associated with the specified increments are independent of each other and unknown.

The second step consists of feeding the two light-waves into the entry points of two light-propagating-media paths having a light propagation time difference and obtaining a combination light wave by summing the light waves emerging from the exit points of the two light-propagating-media paths.

The third step consists of calculating either an estimated uncorrected phase measure $\phi_{um}$ (uncorrected for

modulation-frequency-increment errors) or an estimated corrected phase measure $\phi_{cm}$ (corrected for modulation-frequency-increment errors) of the light propagation time difference for the two paths for a plurality of groups using only measured properties of the combination light wave. The index $m$ denotes the $m$'th group in a plurality of groups.

The starting point in obtaining the estimated corrected phase measure $\phi_{cm}$, corrected for frequency-modulation-error increments, is squaring the amplitude of the combination light wave and smoothing the squared amplitude over a basic time interval. The smoothed amplitude at the end of a basic time interval is denoted by $S_{nm}$ where $n$ identifies the frequency increment associated with the basic time interval and $m$ identifies the group. The estimated corrected phase measure $\phi_{cm}$ is calculated from $S_{nm}$ for a plurality of $n$ values and a plurality of $m$ values.

The values of $S_{nm}$ are used in calculating the values of $F_m$ and $G_m$ which are specified functions of $S_{nm}$ expressible with reasonable accuracy in the form

$$F_m = F_0 \cos\phi_m + E \sin\phi_m$$

$$G_m = G_0 \sin\phi_m$$

The quantity $\phi_m$ is the actual phase measure. The values of $F_m$ and $G_m$ are used in determining $E$, $F_0$, and $G_0$. The estimated corrected phase measure $\phi_{cm}$ is calculated from the values of $F_m$, $G_m$, $E$, $F_0$, and $G_0$.

In a particular species of the invention, $F_m$ and $G_m$ are defined in the following way.

$$F_m = Y_m - X_m$$

$$G_m = Y_m + X_m$$

$$X_m = S_{lm} - S_{jm}$$

$$Y_m = S_{jm} - S_{km}$$

The estimated corrected phase measure $\phi_{cm}$ is calculated from the values of $F_m$, $G_m$, $X_0$, $Y_0$, $F_0$, and $G_0$ where $X_0$, $Y_0$, $F_0$, and $G_0$ are respectively the maximum absolute values of $X_m$, $Y_m$, $F_m$, and $G_m$ for a set of consecutive $m$-values.

The method summarized above can also be used in obtaining an estimated uncorrected phase measure $\phi_{um}$ by ignoring the frequency-modulation-error increments.

**BRIEF DESCRIPTION OF THE DRAWINGS**

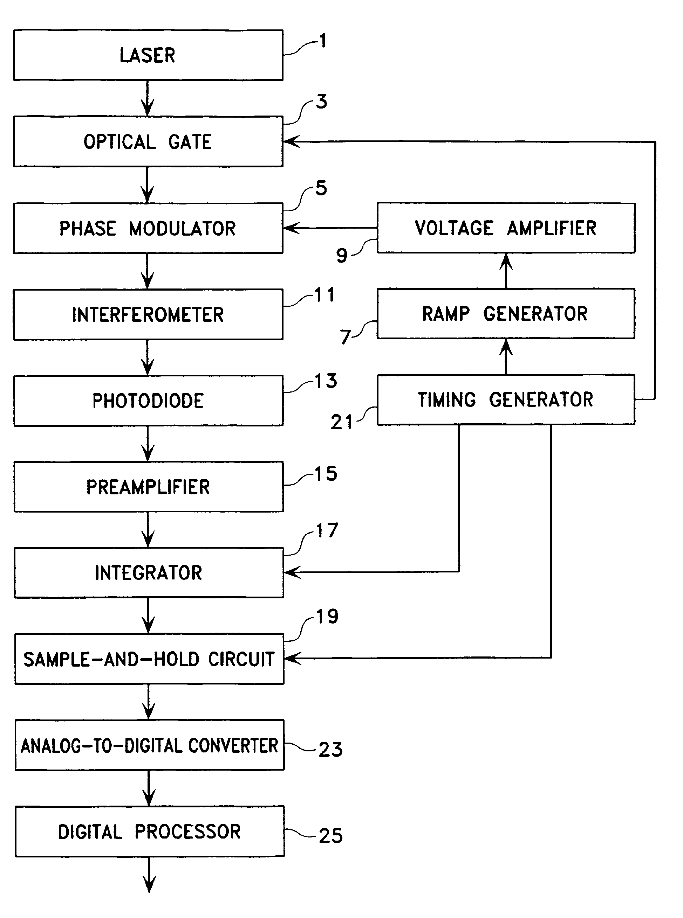

FIG. 1 is a block diagram of apparatus for practicing the method for obtaining a measure of the light propagation time difference for two light-propagating-media paths.

**DESCRIPTION OF THE PREFERRED EMBODIMENT**

The preferred embodiment of the invention is shown in FIG. 1. A laser 1 supplies a light beam of fixed angular frequency $\omega_c$ through optical gate 3 to phase modulator 5 which modulates the phase of the beam in accordance with the expression

$$\theta(t) = \omega_n t + \theta_n \qquad (4)$$

where the modulating angular frequency $\omega_n$ and phase $\theta_n$ correspond to times $t$ in the ranges from $(mN + n)\Delta t$ to but

not including $(mN + n + 1)\Delta t$. The index $m$, which takes on positive and negative integer values, is the group number. The index $n$, which takes on integer values from 0 to $N$-1 is the number of a basic time interval within a group. The integer $N$ denotes the number of basic time intervals within a group.

The quantity $\Delta t$ is the duration of the basic time interval, the basic time interval being the time interval allocated for the transmission of light at a particular modulating frequency. In the preferred embodiment, the time interval $\Delta t$ is the same for each transmission and is typically about 100 ns. However, $\Delta t$ could have other values and could be a function of the indices $n$ and m in other embodiments. The quantity m takes on positive and negative integer values

There are two ways to change the optical frequency of the light from one discrete level to another. The first way is to make a step change in the laser cavity length or by laser mode hopping. The second is to drive the phase modulator 5 with a ramp signal supplied by a ramp generator 7 through a voltage amplifier 9. By changing the slope of the ramp at intervals of $\Delta t$, one can generate a sequence of discrete frequencies.

The output light beam from the phase modulator 5 enters the interferometer 11 which splits the incoming beam into two beams which are fed into separate light-propagating paths having different path propagation times. In the preferred embodiment, a path consists of an optical fiber, and the path propagation time difference $\tau$ is typically in the range from 5 to 10 ns. In other embodiments, a path might be any light-propagating medium such as glass or air. The light beams emerging from the two paths are brought together into a single beam by a combiner, and this single beam is fed into photodiode 13. The output from the photodiode 13 is amplified by the preamplifier 15, smoothed as a result of being integrated by the integrator 17 over times $t$ ranging from $(mN + n)\Delta t + \tau$ to $(mN + n + 1)\Delta t$ to improve the signal-to-noise ratio, and sampled at the end of the $\Delta t$ time interval by the sample-and-hold circuit 19. All of the timing signals required by the system are supplied by the timing generator 21.

A mathematical description of the sampled signal from sample-and-hold circuit 19 is obtained by substituting the expression for $\theta(t)$ given by equation (4) in equation (2) to obtain

$$S(t) = S_{nm} = A_{nm} + B_{nm}\cos(\omega_c\tau + \omega_n\tau + \varepsilon_n) \tag{5}$$

The quantities $A(t)$ and $B(t)$ have been replaced by their values $A_{nm}$ and $B_{nm}$ for the appropriate time interval. We have assumed an unknown error in phase $\varepsilon_n$ introduced as a result of the frequency modulating process.

This invention can be practiced with a variety of choices for $N$ and $\omega_n$. The processing is particularly simple if $N = 3$ and $\omega_n = (n$-1$) \Delta\omega$, where $\Delta\omega$ is a predetermined frequency increment With these choices for $N$ and $\omega_n$, a phase measure of the path propagation time difference $\omega_0\tau$ can be determined in the following way. Equation (5) can be rewritten as

$$S_{0m} = A_{0n} + B_{0m}\cos(\omega_c\tau - \Delta\omega\tau + \varepsilon_0)$$
$$S_{1m} = A_{1m} + B_{1m}\cos(\omega_c\tau + \varepsilon_1) \tag{6}$$
$$S_{2m} = A_{2m} + B_{2m}\cos(\omega_c\tau + \Delta\omega\tau + \varepsilon_2)$$

$$S_{0m} = A_{0m} + B_{0m}\cos[(\omega_c\tau + \frac{\varepsilon_0 + \varepsilon_2}{2}) - (\Delta\omega\tau - \frac{\varepsilon_0 - \varepsilon_2}{2})]$$
$$S_{1m} = A_{1m} + B_{1m}\cos[(\omega_c\tau + \frac{\varepsilon_0 + \varepsilon_2}{2}) + (\varepsilon_1 - \frac{\varepsilon_0 + \varepsilon_2}{2})] \tag{7}$$
$$S_{2m} = A_{2m} + B_{2m}\cos[(\omega_c\tau + \frac{\varepsilon_0 + \varepsilon_2}{2}) + (\Delta\omega\tau - \frac{\varepsilon_0 - \varepsilon_2}{2})]$$

We can rewrite the above equations as

EP 0 919 795 B1

$$S_{0m} = A_{0m} + B_{0m}\cos(\phi_m - \alpha_m)$$
$$S_{1m} = A_{1m} + B_{1m}\cos(\phi_m + \varepsilon)$$
$$S_{2m} = A_{2m} + B_{2m}\cos(\phi_m + \alpha_m)$$

(8)

where we have recognized that $\tau$ is a function of time by attaching the subscript $m$ to $\phi$ and $\alpha$ and

$$\phi_m = \omega_c\tau + \frac{\varepsilon_0 + \varepsilon_2}{2}$$

$$\alpha_m = \Delta\omega\tau - \frac{\varepsilon_0 - \varepsilon_2}{2}$$

(9)

$$\varepsilon = \varepsilon_1 - \frac{\varepsilon_0 + \varepsilon_2}{2}$$

Since the error terms in the above equations vary slowly with time, the quantity $\phi_m$ is also a useful phase measure of the propagation time difference $\tau$. The quantity $\alpha_m$ will be called the modulation phase, and $\varepsilon$ will be called the composite modulation phase error.

The $S_{nm}$'s are digitized by the analog-to-digital converter 23 and supplied to the digital processor 25 for processing group by group.

The digital processor 25 first calculates $L$ and $U$ which are defined by the equations that follow. The $A_{nm}$'s and $B_{nm}$'s do not change significantly over a group time interval, and we can therefore omit the $n$ index.

$$L = S_{0m} - S_{1m} = 2B_m \sin(\frac{\alpha_m + \varepsilon}{2})\sin(\phi_m - \frac{\alpha_m - \varepsilon}{2})$$

$$U = S_{1m} - S_{2m} = 2B_m \sin(\frac{\alpha_m - \varepsilon}{2})\sin(\phi_m + \frac{\alpha_m + \varepsilon}{2})$$

(10)

We denote the amplitudes of $L$ and $U$ by $L_0$ and $U_0$ respectively.

$$L_0 = 2B_m \sin(\frac{\alpha_m + \varepsilon}{2})$$

$$U_0 = 2B_m \sin(\frac{\alpha_m - \varepsilon}{2})$$

(11)

The digital processor 25 then calculates $I$ and $Q$ where

$$I = U - L = 2B_m(1 - \cos\alpha_m)\cos\phi_m - 2\varepsilon B_m \sin\phi_m$$

$$Q = U + L = 2B_m \sin\alpha_m \sin\phi_m$$

(12)

We have approximated $\cos\varepsilon$ by 1 and $\sin\varepsilon$ by $\varepsilon$.

The amplitudes of $U$-$L$ and $U$+$L$ are denoted by $I_0$ and $Q_0$ respectively.

$$I_0 = 2B_m (1 - \cos\alpha_m)$$
$$Q_0 = 2B_m \sin\alpha_m \qquad\qquad (13)$$

The digital processor 25 calculates $\sin\phi_m$ and $\cos\phi_m$ using the equations

$$\sin\phi_m = \frac{Q}{Q_0}$$
$$\cos\phi_m = \frac{I}{I_0} + \frac{\varepsilon Q}{I_0 \sin\alpha_m} \qquad\qquad (14)$$

The error term in the above equation is given by

$$\frac{\varepsilon Q}{I_0 \sin\alpha_m} = \left(\frac{Q_0}{I_0} + \frac{I_0}{Q_0}\right)\left(\frac{U_0 - L_0}{U_0 + L_0}\right)\frac{Q}{Q_0} \qquad\qquad (15)$$

Satisfactory operation of the invention requires that $\phi_m$ does not change significantly over a group time interval but does change by $\pi$ radians over a time period which we will call a long time interval. A second requirement is that $A_m$, $B_m$, and $\alpha_m$ do not change significantly over a long time interval. What this means is that observations of $S_{nm}$ over a long time interval provide in themselves the necessary data to compute all of the required functions of $A_m$, $B_m$, and $\alpha_m$ that are required for the determination of a measure $\phi_m$ of $\tau$ at group time intervals. In terms of the preferred embodiment, observations of $S_{nm}$ over a long time interval provide the means for determining $L_0$, $U_0$, $I_0$, and $Q_0$ which then can be used in determining $\sin\phi_m$ and $\cos\phi_m$, without, any additional information, at group time intervals.

There are a variety of procedures which may be used in determining the values of $L_0$, $U_0$, $I_0$, and $Q_0$. For example, in the case of $I_0$ and $Q_0$ one can simply equate $I_0$ to $|I_m|$ When $Q_m = \delta$ and $Q_0$ to $|Q_m|$ when $I_m = \delta$ where $\delta$ is a constant small compared to either $I_0$ or $Q_0$. To obtain better estimates $I_0$ and $Q_0$, the values of $|I_m|$ and $|Q_m|$ for a set of consecutive values of $m$ that meet the $\delta$ requirement may be averaged.

One can also express $I_0$ and $Q_0$ as $CI_A$ and $CQ_A$ respectively where $C$ is an unknown constant and

$$I_A = \cos(\frac{\pi}{2} P)$$
$$Q_A = \sin(\frac{\pi}{2} P) \qquad\qquad (16)$$

where $P$ is the probability that $|Q_m|$ is larger than $|I_m|$. One can obtain an estimate of $P$ by determining the fraction of values in a set of consecutive values for $m$ for which $|Qm|$ is larger than $|I_m|$. Any arbitrary value can be used for $C$ since it drops out if equations (14) are ratioed to obtain an expression for $\tan\phi_m$.

One can equate $L_0$, $U_0$ $I_0$, and $Q_0$ to the maximum values respectively of $|L_m|$, $|U_m|$,$|I_m|$, and $|Q_m|$ for a set of consecutive values for m. Or one can equate $L_0$, $U_0$, $I_0$, and $Q_0$ to a constant times the sums respectively of $|L_m|$, $|U_m|$, $|I_m|$, and $|XQ_m|$ for a set of consecutive values for m.

The final operation performed by the digital processor 25 is to extract an estimate of the value of $\phi_m$ by, for example, taking either the arctangent of the ratio of $\sin\phi_m$ to $\cos\phi_m$ or the arc-cotangent of the reciprocal of the ratio, depending on the values of the sin and cosine.

**Claims**

**1.**    A method for obtaining a measure of the light propagation time difference for two light-propagating-media paths comprising the steps of generating two substantially identical phase-modulated light waves having the form $\cos[\omega_c t + \theta(t)]$ where $\omega_c$ is the light angular frequency and $\theta(t)$ is the phase of the light wave, feeding the two light waves into the entry points of two light-propagating-media paths having a light propagation time difference $\tau$ and obtaining a combination light wave by summing the light waves emerging from the exit points of the two light-propagating-media paths, squaring the amplitude of the combination light wave and smoothing the squared amplitude over a basic time interval $\Delta t$, and calculating a phase measure of the light propagation time difference for the two paths, the method being **characterized** (1) by the phase $\theta(t)$ of the light wave having the form $\theta(t) = \omega_n t + \theta_n$ where the modulating angular frequency $\omega_n$ and phase $\theta_n$ correspond to times $t$ in the ranges from *(mN + n)*$\Delta t$ to but not including $(mN + n + 1)\Delta t$, the index $m$, which takes on positive and negative integer values, is the group number, the index $n$, which takes on integer values from 0 to $N$-1 is the number of a basic time interval $\Delta t$ within a group, and the integer $N$ denotes the number of basic time intervals $\Delta t$ within a group, the phase-modulated light wave having the form $\cos[\omega_c t + \omega_n t + \theta_n]$, the frequency of the light waves being offset from a reference frequency $\omega_c$ by a different frequency increment $\omega_n$ for each basic time interval $n$ in each group $m$ of a plurality of groups of three or more basic time intervals, (2) by the equation for the result $S_{nm}$ of the squaring and smoothing operations

$$S_{nm} = A_{nm} + B_{nm} \cos(\omega_c \tau + \omega_n \tau + \varepsilon_n)$$

$A_{nm}$ being proportional to the average input optical power and $B_{nm}$ being proportional to the average input optical power and also to the mixing efficiency of the squaring operation, the terms $\varepsilon_n$ being unknown errors in phase introduced as a result of the frequency modulation process, and (3) the calculation of the phase measure utilizing the values $S_{nm}$ to determine either an estimated phase measure $\phi_{um}$ uncorrected for the errors $\varepsilon_n$, or an estimated phase measure $\phi_{cm}$ corrected for the errors $\varepsilon_n$.

2. The method of claim 1 wherein the calculating step of claim 1 further comprises the step:

   calculating the values for $F_m$ and $G_m$, m taking on integer values corresponding to a plurality of groups, $F_m$ and $G_m$ being specified
   functions of $S_{nm}$ expressible with reasonable accuracy in the form

$$F_m = F_0 \cos \Phi_m + E \sin \Phi_m$$

$$G_m = G_0 \sin \Phi_m$$

   where $\phi_m$ is the actual phase measure, $F_0$ is the amplitude of the $\cos \phi_m$ term, and $G_0$ is the amplitude of the $\sin \phi_m$ term.

3. The method of claim 2 wherein the calculating step of claim 1 further comprises the step:

   determining $F_0$ and $G_0$ from the values of $F_m$ and $G_m$ for a plurality of groups.

4. The method of claim 3 wherein the calculating step of claim 1 further comprises the step:

   calculating the estimated uncorrected phase measure $\phi_{um}$ the values of $F_m$, $G_m$, $F_0$, and $G_0$ for a plurality of groups.

5. The method of claim 1 wherein the calculating step of claim 1 further comprises the step:

   calculating the values for $X_m$ and $Y_m$ for a plurality of groups, the quantities $X_m$ and $Y_m$ being defined by the equations

$$X_m = S_{im} - S_{jm}$$

$$Y_m = S_{jm} - S_{km}.$$

**6.** The method of claim 5 wherein the calculating step of claim 1 further comprises the step:

calculating the values for $F_m$ and $G_m$ for a plurality of groups, the quantities $F_m$ and $G_m$ being defined by the equations

$$F_m = Y_m - X_m$$

$$G_m = Y_m + X_m.$$

**7.** The method of claim 6 wherein the calculating step of claim 1 further comprises the step:

calculating the estimated uncorrected phase measure $\phi_{um}$ from the values of $F_m$ and $G_m$ for a plurality of groups.

**8.** The method of claim 2 wherein the calculating step of claim 1 further comprises the step:

determining E, $F_0$, and $G_0$ from the values of $F_m$ and $G_m$ for a plurality of groups.

**9.** The method of claim 8 wherein the calculating step of claim 1 further comprises the step:

calculating the estimated corrected phase measure $\phi_{cm}$ from the values of $F_m$, $G_m$, E, $F_0$, and $G_0$ for a plurality of groups.

**10.** The method of claim 6 wherein the calculating step of claim 1 further comprises the step:

determining $X_0$, $Y_0$, $F_0$, and $G_0$ from the values of $X_m$, $Y_m$, $F_m$, and $G_m$ for a plurality of groups, $X_0$, $Y_0$, $F_0$, and $G_0$ being approximations to the maximum absolute values of $X_m$, $Y_m$, $F_m$, and $G_m$ respectively.

**11.** The method of claim 10 wherein the calculating step of claim 1 further comprises the step:

calculating the estimated corrected phase measure $\phi_{cm}$ from $F_m$, $G_m$, $X_0$, $Y_0$, $F_0$, and $G_0$ for a plurality of groups.

**Patentansprüche**

**1.** Ein Verfahren zum Erlangen einer Messung von der Lichtausbreitungszeitdifferenz für zwei Pfade durch Lichtausbreitungsmedien, wobei das Verfahren die folgenden Schritte aufweist:

Erzeugen von zwei im Wesentlichen identischen phasenmodulierten Lichtwellen, die die Form $\cos[\omega_c t + \theta(t)]$ besitzen, wobei $\omega_c$ die Lichtwinkelfrequenz ist und $\theta(t)$ die Phase der Lichtwelle ist, Leiten der zwei Lichtwellen in die Eintrittspunkte von zwei Pfaden durch Lichtausbreitungsmedien, die eine Lichtausbreitungszeitdifferenz $\tau$ besitzen und Erlangen einer Kombinationslichtwelle durch Summieren der Lichtwellen, die von den Austrittspunkten von den zwei Pfaden durch Lichtausbreitungsmedien heraustreten, Quadrieren der Amplitude von der Kombinationslichtwelle und Glätten der quadrierten Amplitude über ein Grundzeitintervall $\Delta t$, und Berechnen einer Phasenmessung der Lichtausbreitungszeitdifferenz für die zwei Pfade, wobei das Verfahren **dadurch gekennzeichnet ist, dass** (1) die Phase $\theta(t)$ der Lichtwelle die Form $\theta(t) = \omega_n t + \theta_n$ besitzt, wobei die modulierende Winkelfrequenz $\omega_n$ und die Phase $\theta_n$ Zeiten $t$ entsprechen, und zwar in dem Bereich $(mN + n)\Delta t$ bis, aber nicht einschließlich von, $(mN + n + 1)\Delta t$, wobei der Index $m$, der positive und negative ganzzahlige Werte annimmt, die Gruppennummer ist, wobei der Index $n$, der ganzzahlige Werte von 0 bis $N$-1 annimmt, die Nummer von einem Grundzeitintervall $\Delta t$ innerhalb einer Gruppe ist und wobei die ganze Zahl $N$ die Anzahl bzw. Nummer von Grundzeitintervallen $\Delta t$ innerhalb einer Gruppe bezeichnet, wobei die phasenmodulierte Lichtwelle die Form

cos[$\omega_c t + \omega_n t + \theta_n$] besitzt, wobei die Frequenz der Lichtwellen von einer Referenzfrequenz $\omega_c$ versetzt ist, um ein unterschiedliches Frequenzinkrement $\omega_n$ für jedes Grundzeitintervall $n$ in jeder Gruppe $m$ von einer Vielzahl von Gruppen von drei oder mehr Grundzeitintervallen, (2) durch die Gleichung für das Ergebnis $S_{nm}$ von den Quadrierungs- und Glättungsoperationen

$$S_{nm} = A_{nm} + B_{nm} \cos(\omega_c \tau + \omega_n \tau + \varepsilon_n),$$

wobei $A_{nm}$ proportional ist zu der durchschnittlichen optischen Eingangleistung und $B_{nm}$ proportional ist zu der durchschnittlichen optischen Eingangsleistung und auch zu der Mischeffizienz der Quadrierungsoperation, wobei die Ausdrücke $\varepsilon_n$ unbekannte Phasenfehler sind, und zwar eingeführt als ein Ergebnis von dem Frequenzmodulationsprozess, und (3) die Berechnung der Phasenmessung die Werte $S_{nm}$ verwendet zum Bestimmen entweder einer geschätzten Phasenmessung $\phi_{um}$ unkorrigiert für die Fehler $\varepsilon_n$, oder einer geschätzten Phasenmessung $\phi_{cm}$, korrigiert für die Fehler $\varepsilon_n$.

2. Verfahren nach Anspruch 1, wobei der Berechnungsschritt nach Anspruch 1 ferner den folgenden Schritt aufweist:

Berechnen der Werte für $F_m$ und $G_m$, wobei m ganzzahlige Werte annimmt, die einer Vielzahl von Gruppen entsprechen, wobei $F_m$ und $G_m$ spezifizierte Funktionen von $S_{nm}$ sind, die mit vernünftiger Genauigkeit in der folgenden Form ausdrückbar sind:

$$F_m = F_0 \cos \Phi_m + E \sin \Phi_m$$

$$G_m = G_0 \sin \Phi_m$$

wobei $\phi_m$ die tatsächliche Phasenmessung ist, $F_0$ die Amplitude von dem cos $\phi_m$ Ausdruck ist, und $G_o$ die Amplitude von dem sin $\phi_m$ Ausdruck ist.

3. Verfahren nach Anspruch 2, wobei der Berechnungsschritt nach Anspruch 1 ferner den folgenden Schritt aufweist:

Bestimmen von $F_0$ and $G_0$ aus den Werten $F_m$ und $G_m$ für eine Vielzahl von Gruppen.

4. Verfahren nach Anspruch 3, wobei der Berechnungsschritt nach Anspruch 1 ferner den folgenden Schritt aufweist:

Berechnen der geschätzten unkorrigierten Phasenmessung $\Phi_{um}$ aus den Werten $F_m$, $G_m$, $F_0$ und $G_0$ für eine Vielzahl von Gruppen.

5. Verfahren nach Anspruch 1, wobei der Berechnungsschritt nach Anspruch 1 ferner den folgenden Schritt aufweist:

Berechnen der Werte für $X_m$ und $Y_m$ für eine Vielzahl von Gruppen, wobei die Größen $X_m$ und $Y_m$ durch die folgenden Gleichungen definiert sind:

$$X_m = S_{im} - S_{jm}$$

$$Y_m = S_{jm} - S_{km}.$$

6. Verfahren nach Anspruch 5, wobei der Berechnungsschritt nach Anspruch 1 ferner den folgenden Schritt aufweist:

Berechnen der Werte für $F_m$ und $G_m$ für eine Vielzahl von Gruppen, wobei die Größen $F_m$ und $G_m$ durch die

folgenden Gleichungen definiert sind:

$$F_m = Y_m - X_m$$

$$G_m = Y_m + X_m.$$

**7.** Verfahren nach Anspruch 6, wobei der Berechnungsschritt nach Anspruch 1 ferner den folgenden Schritt aufweist:

Berechnen der geschätzten unkorrigierten Phasenmessung $\phi_{um}$ aus den Werten von $F_m$ und $G_m$ für eine Vielzahl von Gruppen.

**8.** Verfahren nach Anspruch 2, wobei der Berechnungsschritt nach Anspruch 1 ferner den folgenden Schritt aufweist:

Bestimmen von E, $F_0$, und $G_0$ aus den Werten $F_m$ und $G_m$ für eine Vielzahl von Gruppen.

**9.** Verfahren nach Anspruch 8, wobei der Berechnungsschritt nach Anspruch 1 ferner den folgenden Schritt aufweist:

Berechnen der geschätzten korrigierten Phasenmessung $\phi_{cm}$ aus den Werten $F_m$, $G_m$, E, $F_0$ und $G_0$ für eine Vielzahl von Gruppen.

**10.** Verfahren nach Anspruch 6, wobei der Berechnungsschritt nach Anspruch 1 ferner folgenden Schritt aufweist:

Bestimmen von $X_0$, $Y_0$, $F_0$, und $G_0$ aus den Werten von $X_m$, $Y_m$, $F_m$ und $G_m$ für eine Vielzahl von Gruppen, wobei $X_0$, $Y_0$, $F_0$, und $G_0$ entsprechend Näherungen für die maximalen Absolutwerte $X_m$, $Y_m$, $F_m$ und $G_m$ sind.

**11.** Verfahren nach Anspruch 10, wobei der Berechnungsschritt nach Anspruch 1 ferner den folgenden Schritt aufweist:

Berechnen der geschätzten korrigierten Phasenmessung $\phi_{cm}$ aus $F_m$, $G_m$, $X_0$, $Y_0$, $F_0$ und $G_0$ für eine Vielzahl von Gruppen.

**Revendications**

**1.** Procédé pour obtenir une mesure de la différence de temps de propagation de la lumière entre deux trajets dans un milieu de propagation de lumière, comprenant les étapes consistant à générer deux ondes lumineuses modulées en phase sensiblement identiques de la forme $\cos[\omega_c t + \theta(t)]$ où $\omega_c$ est la fréquence angulaire de la lumière et $\theta(t)$ est la phase de l'onde lumineuse, à fournir les deux ondes lumineuses dans les points d'entrée de deux trajets dans un milieu de propagation de lumière ayant une différence de temps $\tau$ de propagation de lumière et obtenir une onde lumineuse combinée en ajoutant les ondes lumineuses émergeant des points de sortie des deux trajets dans le milieu de propagation de lumière, à élever au carré l'amplitude de l'onde lumineuse combinée et lisser l'amplitude au carré sur un intervalle de temps élémentaire $\Delta(t)$, et à calculer une mesure de phase de la différence temporelle de propagation lumineuse pour les deux trajets, le procédé étant **caractérisé** (1) en ce que la phase $\theta(t)$ de l'onde lumineuse est de la forme $\theta(t) - w_n t + \theta_n$, où la fréquence angulaire de modulation $\omega_n$ et la phase $\theta_n$ correspondent à des temps t dans la plage allant de $(mN + n)\Delta t$ jusqu'à, mais de façon non inclusive, $(mN + n + 1)\Delta t$, l'indice m, qui prend des valeurs entières positives et négatives, est le numéro de groupe, l'indice n, qui prend des valeurs entières comprises entre 0 et N-1, est le numéro d'un intervalle de temps élémentaire $\Delta t$ dans un groupe, et l'entier N représente le nombre d'intervalles de temps élémentaires $\Delta t$ dans un groupe, l'onde lumineuse modulée en phase étant de la forme $\cos[\omega_c t + \omega_n t + \theta_n]$, la fréquence des ondes lumineuses étant décalée par rapport à une fréquence de référence $\omega_c$ d'un incrément fréquentiel $\omega_n$ différent pour chaque intervalle de temps élémentaire n dans chaque groupe m d'une pluralité de groupes de trois ou plus intervalles de temps élémentaires, (2) par l'équation donnant le résultat $S_{nm}$ des opérations d'élévation au carré et de lissage

$$S_{nm} = A_{nm} + B_{nm} \cos(\omega_c \tau + \omega_n \tau + \varepsilon_n),$$

$A_{nm}$ étant proportionnel à la puissance optique d'entrée moyenne et $B_{nm}$ étant proportionnel à la puissance optique d'entrée moyenne et aussi à l'efficacité de mélange de l'opération d'élévation au carré, les termes $\varepsilon_n$ étant des erreurs de phases inconnues introduites en résultat du processus de modulation de fréquence, et (3) en ce que le calcul de la mesure de phase utilise les valeurs $S_{nm}$ pour déterminer soit une mesure de phase estimée $\phi_{um}$ non corrigée pour les erreurs $\varepsilon_n$, soit une mesure de phase estimée $\phi_{cm}$ corrigée pour les erreurs $\varepsilon_n$.

2. Procédé selon la revendication 1, dans lequel l'étape de calcul de la revendication 1 comprend en outre l'étape suivante :

calculer des valeurs $F_m$ et $G_m$, m prenant des valeurs entières correspondant à une pluralité de groupes, $F_m$ et $G_m$ étant des fonctions spécifiées de $S_{nm}$ pouvant s'exprimer avec une précision raisonnable sous la forme :

$$F_m = F_0 \cos \phi_m + E \sin \phi_m$$

$$G_m = G_0 \sin \phi_m$$

où $\phi_m$ est la mesure de phase effective, $F_0$ est l'amplitude du terme $\cos \phi_m$, et $G_0$ est l'amplitude du terme $\sin \phi_m$.

3. Procédé selon la revendication 2, dans lequel l'étape de calcul de la revendication 1 comprend en outre l'étape suivante :

déterminer $F_0$ et $G_0$ à partir des valeurs de $F_m$ et $G_m$ pour une pluralité de groupes.

4. Procédé selon la revendication 3, dans lequel l'étape de calcul de la revendication 1 comprend en outre l'étape suivante :

calculer la mesure de phase non corrigée estimée $\phi_{um}$ à partir des valeurs de $F_m$, $G_m$, $F_0$ et $G_0$ pour une pluralité de groupes.

5. Procédé selon la revendication 1, dans lequel l'étape de calcul de la revendication 1 comprend en outre l'étape suivante :

calculer des valeurs $X_m$ et $Y_m$ pour une pluralité de groupes, les quantités $X_m$ et $Y_m$ étant définies par les équations

$$X_m = S_{im} - S_{jm}$$

$$Y_m = S_{jm} - S_{km}.$$

$Y_m = S_{jm} - S_{km}.$

6. Procédé selon la revendication 5, dans lequel l'étape de calcul de la revendication 1 comprend en outre l'étape suivante :

calculer des valeurs $F_m$ et $G_m$ pour une pluralité de groupes, les quantités $F_m$ et $G_m$ étant définies par les équations :

$$F_m = Y_m - X_m$$

$$G_m = Y_m + X_m.$$

**7.** Procédé selon la revendication 6, dans lequel l'étape de calcul de la revendication 1 comprend en outre l'étape suivante :

calculer la mesure de phase non corrigée estimée $\phi_{um}$ à partir des valeurs de $F_m$ et $G_m$ pour une pluralité de groupes.

**8.** Procédé selon la revendication 2, dans lequel l'étape de calcul de la revendication 1 comprend en outre l'étape suivante :

déterminer E, $F_0$ et $G_0$ à partir des valeurs de $F_m$ et $G_m$ pour une pluralité de groupes.

**9.** Procédé selon la revendication 8, dans lequel l'étape de calcul de la revendication 1 comprend en outre l'étape suivante :

calculer la mesure de phase corrigée estimée $\phi_{cm}$ à partir des valeurs de $F_m$, $G_m$, E, $F_0$ et $G_0$ pour une pluralité de groupes.

**10.** Procédé selon la revendication 6, dans lequel l'étape de calcul de la revendication 1 comprend en outre l'étape suivante :

déterminer $X_0$, $Y_0$, $F_0$ et $G_0$ à partir des valeurs de $X_m$, $Y_m$, $F_m$, et $G_m$ pour une pluralité de groupes, $X_0$, $Y_0$, $F_0$ et $G_0$ étant des approximations des valeurs absolues maximum de $X_m$, $Y_m$, $F_m$ et $G_m$ respectivement.

**11.** Procédé selon la revendication 10, dans lequel l'étape de calcul de la revendication 1 comprend en outre l'étape suivante :

calculer la mesure de phase corrigée estimée $\phi_{cm}$ à partir de $F_m$, $G_m$, $X_0$, $Y_0$, $F_0$ et $G_0$ pour une pluralité de groupes.

LASER — 1

OPTICAL GATE — 3

PHASE MODULATOR — 5

VOLTAGE AMPLIFIER — 9

INTERFEROMETER — 11

RAMP GENERATOR — 7

PHOTODIODE — 13

TIMING GENERATOR — 21

PREAMPLIFIER — 15

INTEGRATOR — 17

SAMPLE-AND-HOLD CIRCUIT — 19

ANALOG-TO-DIGITAL CONVERTER — 23

DIGITAL PROCESSOR — 25

**EP 0 919 795 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5227857 A